# EUROPEAN PATENT SPECIFICATION

(11) **EP 0 625 295 B1**
(45) Date of publication and mention of the grant of the patent: **05.04.2000**
(21) Application number: 93904168.7
(22) Date of filing: 05.02.1993
(51) Int. Cl.: H04B 10/08, G01M 11/00

(54) **OPTICAL SIGNAL TRANSMISSION NETWORK**
OPTISCHES UBERTRAGUNGSNETZWERK
RESEAU DE TRANSMISSION DE SIGNAUX OPTIQUES

(30) Priority: 07.02.1992 GB 9202564; 16.10.1992 GB 9221835
(43) Date of publication of application: 23.11.1994
(73) Proprietor: MARCONI COMMUNICATIONS LIMITED, Coventry, CV3 1HJ (GB)
(72) Inventor: SHIPLEY, Simon Paul, Aylesbury, Buckinghamshire HP20 1LC (GB)
(74) Representative: Hoste, Colin Francis
(86) International application number: GB9300247
(87) International publication number: WO9316533

(56) References cited:
- EP-A- 0 390 320
- WO-A-90/06498
- PATENT ABSTRACTS OF JAPAN vol. 14, no. 376 (P-1092)1990

## Description

This invention relates to optical signal transmission networks, as may be used, for example, in optical fibre telecommunications, and relates, in particular, to a fault location and diagnostic systems for use with such networks.

Over the past decade, optical time domain reflectometry, hereinafter referred to as OTDR, has become an established tool for the location and evaluation of the features on an optical fibre route. For example, OTDR techniques are now commonly used to determine both the position and loss of splices and connectors and the position of line breaks as well as providing a means for making single-ended, real-time system loss measurements.

In use of an optical time domain reflectometer a short pulse of light is launched into an optical fibre under test and the backscattered signal is monitored as a function of the time of flight (or equivalently distance) along the fibre. The magnitude of the backscattered signal depends on the Rayleigh scattering, attenuation, inhomogeneities, splices, components and the optical power level in the fibre. Features in the trace of backscatter versus time may then be correlated with the presence of discontinuities and disruptions in the fibre route.

Whilst OTDR techniques are extremely valuable as a diagnostic tool for the location of faults in simple point to point links there is now an increasing trend towards more complex passive optical networks.

In such networks a number of branch circuits may emanate from a single optical fibre connected, for example to a telephone exchange, and the branch circuits may be further divided into further branch circuits. Such an arrangement can provide a significant cost reduction by utilising the available bandwidth to share said single exchange fibre amongst a number of customers, thereby reducing the level of exchange equipment and fibre installation costs borne by each customer.

It will, however, be apparent that when a signal from OTDR equipment is transmitted along said single fibre, and thence to the branch circuits, the signal which is returned at any instant, following the transmission of an output signal from the OTDR equipment, will be made up of light backscattered from many points in the network at the same distance from the equipment. This makes the location of a fault in the network difficult and time-consuming.

In PCT application WO 90/06498 a method is described of detecting loss in a branched optical fibre network comprising a first optical fibre and a plurality of second fibres each of which is coupled to the first optical fibre. The first optical fibre constitutes a main line, and the second optical fibres constitute branch lines. A respective reflector is associated with each of the branch lines. The method comprises the steps of launching a pulse into the main line and monitoring the main line for changes in attenuation of reflected signals returning from the reflectors. If the branch lines are of the same length the branches may be arranged to reflect light of different wavelengths. Alternatively, the reflectors may be modulated.

Patent Abstracts of Japan, vol. 14, no. 376, (P-1092) 1990 describes the use of an apparatus which measures the backward scattering light rays in the longitudinal directions in split light paths as the functions of running times. An OTDR has light sources which can be oscillated at an arbitrary one wavelength among the different wavelengths. The light source which generates the light having the required wavelength is selected with an optical switch among the light sources. Each of a number of filters passes any one wavelength among the wavelengths and blocks the other wavelengths.

An object of the invention is to provide a means of simplifying such fault location.

According to the present invention there is provided an optical signal transmission network comprising a main optical fibre having a plurality of branch circuits and having an optical time domain reflectometer (OTDR) connected to the main optical fibre so as to transmit an output signal through the main fibre and the branch circuits, characterised in that each branch circuit incorporates modulating means adjacent to the branch point for modulating backscattered light from the output signal in a manner such as to produce a signal unique to that branch and the OTDR incorporating detecting means for distinguishing the signals returned from the individual branch circuits.

Each of the individual branch circuits may incorporate means for modulating the state of polarisation of the backscattered output light signal from the OTDR equipment in a unique manner, the OTDR incorporating means for detecting the state of polarisation of the returning signals. Decoding of the returned signal may be achieved by splitting it into two polarised components, the intensity of which will have components at the modulation frequency.

The invention will be further explained by way of example with reference to Figures 1 to 4 of the accompanying drawings, in which:
Figure 1 represents in diagrammatic form a typical OTDR system;
Figure 2 represents part of a known optical fibre telecommunication network;
Figure 3 illustrates the manner of operation of the network of Figure 2; and
Figure 4 represents part of an optical fibre telecommunication network according to the present invention.

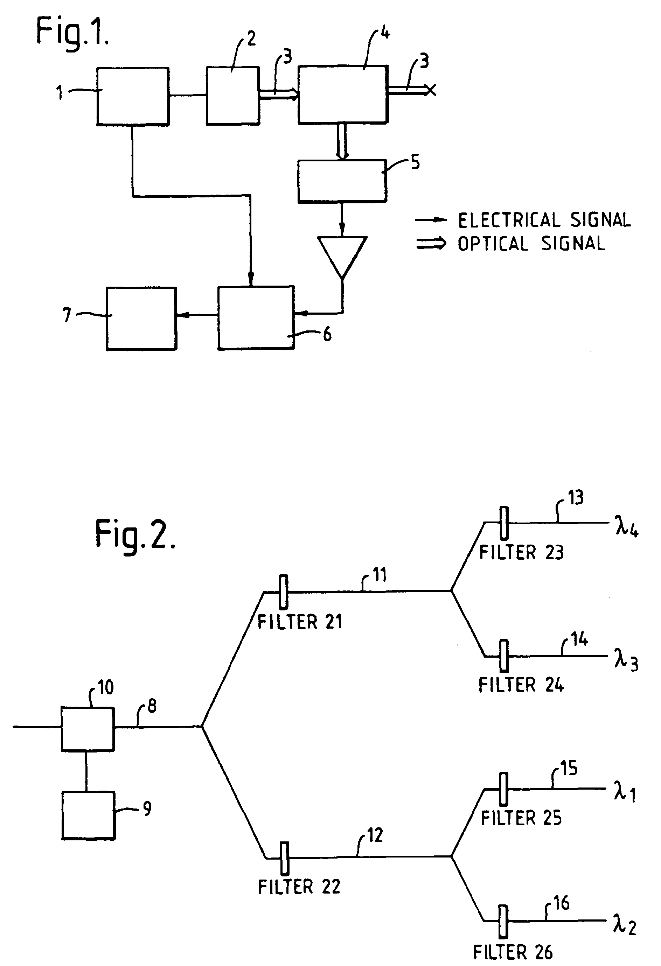

Referring first to Figure 1, the OTDR equipment illustrated incorporates an electrical pulse generator 1, the output of which is fed to means 2 for producing a light signal in a selected waveband, and this is fed, in turn, into an optical fibre 3.

When a signal is generated by the OTDR equipment, a signal will be returned along the fibre 3 made up of light backscattered from splices, disconformities and possible faults in the fibre, the returned signal being fed via a directional coupler or beam splitter 4 to a convertor 5 and detector 6 responsive to the returned signal, and display means 7 for indicating the signal value at selected instants following the transmission of the output signal, i.e. after selected round trip delay times, and this accordingly enables the location of any fault in the fibre to be readily determined.

Such an arrangement operates quite satisfactorily where there is only a single output fibre. However where the fibre 3 has connected to it a plurality of branch circuits, as, for example in the case of an optical telecommunication system, the returning signal at any instant will be made up of light backscattered from many individual points at the same distance from the OTDR equipment, making the extraction of useful information from the equipment extremely complex.

Figure 2 illustrates how this difficulty may be avoided, and represents, in simplified form, part of an optical fibre telecommunication network comprising a main fibre 8 connected to a telephone exchange (not shown) and feeding two branch circuits branch circuits 11, 12, each of these feeding, in turn, two further branch circuits 13, 14, 15 and 16 respectively.

OTDR equipment, shown diagrammatically at 9 feeds output signals into the fibre 8 through suitable coupling means 10, the signals being transmitted from the fibre 8 into the various branch circuits. Each branch circuit is provided, adjacent the respective branch point, with a dielectric filter 21, 22, 23, 24. The filters are such that they do not introduce any significant loss at traffic wavelengths (for example 1200 to 1570nm) or at the designated OTDR equipment from any branch of the network have a wavelength unique to that branch. Accordingly each possible route is assigned a unique wavelength, and by tuning the OTDR source wavelength across the allocated OTDR band, each individual route will be selected in turn.

Characterisation of the selected route may then proceed as if it is a simple point to point link.

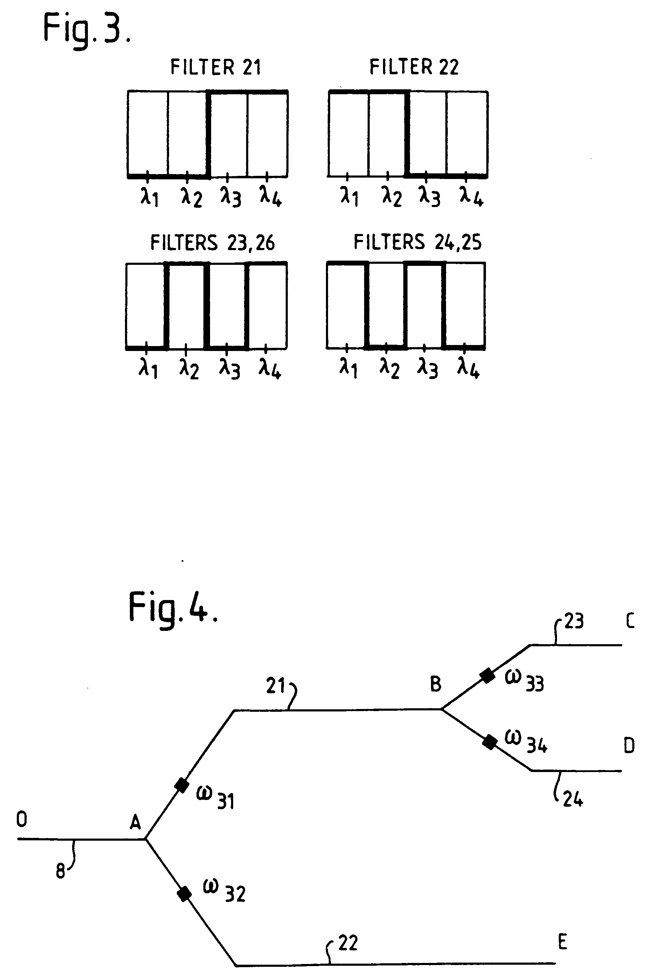

Figure 3 illustrates a manner in which this may be achieved in the simple branch circuit shown in Figure 2. Thus filter 21 heavily attenuates or reflects wavelengths λ₁ and λ₂, while passing wavelengths λ₃ and λ₄. Filter 22 heavily attenuates or reflects wavelengths λ₃ and λ₄ while passing wavelengths λ₁ and λ₂. Filters 23 and 26 heavily attenuate or reflect wavelengths λ₁ and λ₃ and pass wavelengths λ₂ and λ₄ and filters 24 and 25 heavily attenuate or reflect wavelengths λ₂ and λ₄ and pass wavelengths λ₁ and λ₃.

It will therefore be seen that wavelength λ₄ is unique to branch 13, λ₃ to branch 14, λ₁ to branch 15 and λ₂ to branch 16.

Figure 4 illustrates part of an optical fibre telecommunication network comprising a main fibre 8, first branch circuits 21, 22 and further branch circuits 23, 24. In this case each of the branch circuits 21 to 24 incorporates, adjacent the branch point, a modulator 31 to 34 respectively. OTDR equipment feeds output signals into the fibre 8 through suitable coupling means (not shown), and the modulators in the various branch circuits are arranged to modulate the OTDR signals at unique wavelengths.

The length OA is single pathed and hence may be characterised by standard 'DC' OTDR measurements. Lengths ABC and ABD return OTDR signals modulated at frequency 31, and will therefore have a non-zero component at this frequency, whilst route AE, which is modulated at ω 32, has no component at 31. Thus length AB has been uniquely determined. Similarly selecting frequency ω 33 or ω 34 allows measurement of BC or BD respectively.

Many mechanisms for such loss modulation may be envisaged, but a low cost, clip-on modulator would be ideal. This restricts the modulation scheme to one in which the fibre is physically perturbed. If primary coated fibre is accessible, then microbending may be conveniently used to induce loss, whereas jacketed fibre could more easily be modulated by inducing periodic bulk bend loss. Acousto-optic or other forms of modulators might also be used for some applications. The depth of the loss modulation will, however, be limited by the need to maintain a minimum required error performance for the system.

In a modification of the embodiment illustrated in Figure 4, the modulators 31 to 34 may be replaced by modulators which modulate the polarisation of light under examination. By this means it is possible to determine the returned signal without disrupting traffic signals to any significant extent. Decoding of the returned signal can be achieved by splitting it into two orthoganally polarised components, the intensity of which will have components at the modulation frequency. Unambiguous measurements of the various route segments may then be made as with the loss modulation technique described above.

It will be appreciated that although the invention has been explained with reference to simple networks, it can readily be applied to more complicated networks, by the use of suitable filters or modulators as the case may be. Moreover although it is primarily concerned with the location of faults in optical fibre telecommunication systems it may also be used to advantage in other systems employing multibranched optical fibre networks.

## Claims

1. An optical signal transmission network comprising a main optical fibre (8) having a plurality of branch circuits (21, 22, 23, 24) and having an optical time domain reflectometer (OTDR) connected to the main optical fibre (8) so as to transmit an output signal through the main optical fibre (8) and the branch circuits (21, 22, 23, 24), characterised in that each branch circuit (21, 22, 23, 24) incorporates modulating means (31, 32, 33, 34), adjacent to the branch point (A, B) for modulating backscattered light from the output signal in a manner such as to produce a signal unique to that branch (21, 22, 23, 24) and the OTDR incorporating detecting means for distinguishing the signals returned from the individual branch circuits (21, 22, 23, 24).

2. An optical signal transmission network as claimed in Claim 1, wherein the modulating means is arranged to modulate the state of polarisation of the backscattered light.

3. An optical signal transmission network as claimed in Claim 2, wherein the detecting means comprises means for splitting the returned signals into two orthogonal components.

## Patentansprüche

1. Optisches Signalübertragungsnetzwerk mit einer optischen Hauptfaser (8), die eine Vielzahl von Verzweigungsleitungen (21, 22, 23, 24) und ein optisches Zeitbereichreflektometer (OTDR) aufweist, das an dar optischen Hauptfaser (8) so angeschlossen ist, daß es ein Ausgangssignal durch die optische Hauptfaser (8) und die Verzweigungsleitungen (21, 22, 23, 24) überträgt, **dadurch gekennzeichnet,** daß jede Verzweigungsleitung (21, 22, 23, 24) in der Nähe des verzweigungspunktes (A, B) ein Modulationsmittel (31, 32, 33, 34) aufweist, das rückwärts gestreutes Licht des Ausgangssignals in der Weise moduliert, daß ein Signal erzeugt wird, das für diese Verzweigungsleitung (21, 22, 23, 24) einmalig ist, und daß das OTDR ein Detektionsmittel zum Unterscheiden der Signale aufweist, die von den einzelnen Verzweigungsleitungen zurückkehren.

2. Optisches Signalübertragungsnetzwerk nach Anspruch 1, bei dem das Modulationsmittel so ausgebildet ist, daß es den Polarisationszustand des rückwärts gestreuten Lichts moduliert.

3. Optisches Signalübertragungsnetzwerk nach Anspruch 2, bei der das Detektionsmittel ein Mittel zum Aufteilen des zurückgekehrten Signale in zwei orthogonale Komponenten aufweist.

## Revendications

1. Réseau de transmission de signaux optiques comportant une fibre optique principale (8) ayant une pluralité de circuits de dérivation (21, 22, 23, 24) et ayant un réflectomètre optique temporel (OTDR) connecté à la fibre optique principale (8) de manière à transmettre un signal de sortie à travers la fibre optique principale (8) et les circuits de dérivation (21, 22, 23, 24), caractérisé en ce que chaque circuit de dérivation (21, 22, 23, 24) comporte des moyens de modulation (31, 32, 33, 34), adjacents au point de dérivation (A, B) pour moduler une lumière rétrodiffusée provenant du signal de sortie de telle sorte qu'un signal unique à cette dérivation (21, 22, 23, 24) est produit, et le OTDR incorporant des moyens de détection pour distinguer les signaux renvoyés par les circuits de dérivation individuels (21, 22, 23, 24).

2. Réseau de transmission de signaux optiques selon la revendication 1, dans lequel les moyens de modulation sont conçus pour moduler l'état de polarisation de la lumière rétrodiffusée.

3. Réseau de transmission de signaux optiques selon la revendication 2, dans lequel les moyens de détection comportent des moyens pour diviser les signaux renvoyés en deux composantes orthogonales.
